# EUROPEAN PATENT APPLICATION

(11) **EP 4 819 159 A1**
(43) Date of publication of application: **07.10.2026**
(21) Application number: 24923318.0
(22) Date of filing: 14.09.2024
(51) Int. Cl.: G21C 11/08

(54) **OFFSHORE NUCLEAR POWER PLATFORM AND REACTOR-COMPARTMENT ARRANGEMENT STRUCTURE OF OFFSHORE NUCLEAR POWER PLATFORM**

(30) Priority: 05.02.2024 CN 202410171806
(71) Applicant: China Nuclear Power Technology Research Institute Co., Ltd, Shenzhen, Guangdong 518031 (CN); CGN Power Co., Ltd., Shenzen, Guangdong 518026 (CN)
(72) Inventor: WANG, Xiao, Shenzhen, Guangdong 518031 (CN); SHAO, Huichao, Shenzhen, Guangdong 518031 (CN); SHUAI, Jianyun, Shenzhen, Guangdong 518031 (CN); RUI, Min, Shenzhen, Guangdong 518031 (CN); ZHANG, Haokun, Shenzhen, Guangdong 518031 (CN); ZHAO, Chongbang, Shenzhen, Guangdong 518031 (CN); ZHANG, Lide, Shenzhen, Guangdong 518031 (CN); CHEN, Guancun, Shenzhen, Guangdong 518031 (CN); ZHANG, Shoujie, Shenzhen, Guangdong 518031 (CN); LIU, Qingsong, Shenzhen, Guangdong 518031 (CN); LI, Quanzhang, Shenzhen, Guangdong 518031 (CN); NI, Liang, Shenzhen, Guangdong 518031 (CN)
(74) Representative: Westphal, Mussgnug & Partner, Patentanwälte mbB
(86) International application number: PCT/CN2024/119221
(87) International publication number: WO 2025/167112

(57) **Abstract**

The present application discloses an offshore nuclear power platform and a reactor-compartment arrangement structure of the offshore nuclear power platform. The reactor-compartment arrangement structure comprises a first partition member, a second partition member, and a third partition member. The first partition member is horizontally arranged within a reactor compartment and divides the reactor compartment into an upper space and a first space. The second partition member is connected to the first partition member and located in the first space,and divides the first space into a second space and an installation space. The third partition member is located within the second space and connected to the first partition member and/or the second partition member, so as to divide the second space into a suppression pool space and at least one corner space. The suppression pool space is disposed along the periphery of the installation space,and the corner space is located on the outer side of the suppression pool space away from the installation space. The present application achieves a compact reactor compartment structure, effectively reducing the weight of the reactor compartment structure and lowering manufacturing difficulty.

## Description

### TECHNICAL FIELD

The present application relates to the technical field of reactor compartment layout, and in particular to an offshore nuclear power platform and a reactor-compartment arrangement structure of the offshore nuclear power platform.

### BACKGROUND

The reactor compartment is the core of an offshore nuclear power platform, and is mainly arranged with a primary circuit system together with its nuclear auxiliary systems and dedicated safety systems, etc. It accommodates the complete set of primary circuit main equipment, part of auxiliary equipment and dedicated safety equipment. The realization of its system functions and its safety directly affect nuclear safety. The reactor compartment is located at the middle of the platform. Its size, weight and center of gravity directly affect the cost and performance of the platform, and are one of the important factors influencing overall parameters of the platform such as stability, draft and navigation speed. In land-based large pressurized water reactor nuclear power plants, the reactor building is generally arranged in a cylindrical structure. For offshore nuclear power platforms, if the arrangement method of land-based reactor buildings is adopted, the following problems exist:
difficult structural implementation: the hull compartment of the offshore nuclear power platform generally adopts flat steel structures, and adopting a cylindrical design will increase the difficulty of fabrication and manufacturing; insufficiently compact arrangement: land-based nuclear power plants have large sites and no special limitation on layout space, whereas offshore nuclear power platforms have limited layout space and require a compact arrangement as far as possible to improve space utilization; difficult radiation shielding implementation: land-based nuclear power plants generally achieve radiation shielding by concrete structures with sufficient thickness, whereas offshore nuclear power platforms cannot use concrete, and radiation protection design faces challenges.

### SUMMARY OF THE INVENTION

The technical problem to be solved by the present application is to provide an offshore nuclear power platform and a reactor-compartment arrangement structure of the offshore nuclear power platform.

The technical solution adopted by the present application to solve the technical problem thereof is:
providing a reactor-compartment arrangement structure of an offshore nuclear power platform, comprising:
a first partition member, the first partition member being horizontally arranged within a reactor compartment so as to divide the reactor compartment into an upper space and a first space located below the upper space;
a second partition member, the second partition member being connected to the first partition member and located in the first space so as to divide the first space into a second space and an installation space for accommodating main equipment; and
a third partition member, the third partition member being disposed within the second space and connected to the first partition member and/or the second partition member so as to divide the second space into a suppression pool space and at least one corner space;
wherein, the suppression pool space is disposed along a periphery of the installation space, and the corner space is located on an outer side of the suppression pool space away from the installation space.

In some embodiment, a central portion of the first partition member is formed with a clearance passage for communicating the installation space with the upper space; the second partition member comprises a connecting plate and a base plate, the connecting plate being connected to an inner peripheral edge of the first partition member, and the base plate being connected to an end of the connecting plate remote from the first partition member, the base plate together with the connecting plate defining the installation space;
the installation space comprises an installation chamber, a pressure vessel receiving recess, and two steam generator receiving recesses; a portion of a wall surface of the base plate is recessed downwardly to form partition members including the pressure vessel receiving recess and the two steam generator receiving recesses; the pressure vessel receiving recess is located on a central axis of the reactor-compartment arrangement structure, and the two steam generator receiving recesses are symmetrically arranged with respect to the pressure vessel receiving recess; an upper end surface of the base plate together with the connecting plate defines the installation chamber, and the installation chamber is in communication with the pressure vessel receiving recess and the two steam generator receiving recesses, respectively.

In some embodiment, the installation chamber comprises a pressurizer chamber and a diamond-shaped main chamber, the main chamber being in communication with the pressurizer chamber; the pressure vessel receiving recess and the two steam generator receiving recesses are each in communication with the main chamber, the two steam generator receiving recesses being formed along one diagonal of the main chamber;
the main equipment comprises a pressurizer, a pressure vessel, two steam generators, and two main pumps; the pressure vessel and the steam generators are disposed within the main chamber, and at least partially extend into the pressure vessel receiving recess and the steam generator receiving recesses, respectively; the main pumps are disposed within the main chamber and symmetrically arranged with respect to the pressure vessel receiving recess along the other diagonal of the main chamber; the pressurizer is disposed within the pressurizer chamber, and a projection of the pressurizer in a vertical direction is located on one of symmetry axes of the reactor compartment.

In some embodiment, suppression pool water is stored in the suppression pool space, and a water surface of the suppression pool water divides the suppression pool space into a water space and a gas space; in an initial state, the water surface of the suppression pool water is flush with a lower end surface of the installation chamber, such that the water space is disposed along a periphery of the pressure vessel receiving recess and the two steam generator receiving recesses in the circumferential direction thereof; an upper end surface of the gas space is flush with an upper end surface of the installation chamber, such that the gas space is disposed along a periphery of the installation chamber.

In some embodiment, the pressure vessel receiving recess communicates with the suppression pool space through a pipeline.

In some embodiment, the corner space comprises a main space and a personnel passage in communication with the main space, and the personnel passage is located above the main space and is in communication with the main space.

In some embodiment, the reactor-compartment arrangement structure of the offshore nuclear power platform further comprising a shielding enclosure, wherein the shielding enclosure is disposed within the installation chamber, the main equipment extends through the shielding enclosure, and a horizontal cross section of the shielding enclosure is adapted to a horizontal cross section of the installation chamber.

In some embodiment, an upper end surface of the shielding enclosure is higher than an upper end surface of the first partition member; the reactor-compartment arrangement structure of the offshore nuclear power platform further comprises a grating platform, the grating platform being disposed on the first partition member and the shielding enclosure, a lower portion thereof being connected respectively to the upper end surface of the first partition member and the upper end surface of the shielding enclosure.

In some embodiment, the reactor-compartment arrangement structure of the offshore nuclear power platform further comprising a plurality of ex-core detector arrangement members, wherein the ex-core detector arrangement member is formed therein with a longitudinal passage for accommodating an ex-core detector, and the ex-core detector arrangement members are circumferentially spaced around the pressure vessel receiving recess.

In some embodiment, the number of the corner spaces is two, the two corner spaces being centrally symmetrical with respect to a central axis of the reactor-compartment arrangement structure of the offshore nuclear power platform;
and/or, the reactor-compartment arrangement structure of the offshore nuclear power platform further comprises a safety injection system configured to supply water to a primary circuit, the safety injection system comprising a recirculation filter disposed in the water of the suppression pool space;
and/or, the corner space is provided with a medium-pressure safety injection tank and a regenerative heat exchanger, neither of which has a height requirement;
and/or, a ladder is provided in the corner space for allowing personnel to move to the upper space.

An offshore nuclear power platform is provided, which comprises a hull compartment and the reactor-compartment arrangement structure of the offshore nuclear power platform according to the above, wherein reactor-compartment arrangement structure of the offshore nuclear power platform is disposed within the hull compartment.

The present application has at least the following beneficial effects:

In the present application, by constructing a reactor-compartment arrangement structure in which a suppression pool is arranged circumferentially around the installation space, the reactor compartment structure can be made more compact; and the suppression pool water is arranged around the reactor, thereby forming primary shielding for the reactor core, which can reduce the shielding weight; meanwhile, the suppression pool space shares partial wall surfaces with the reactor compartment, which can effectively reduce the structural weight of the reactor compartment and reduce the manufacturing difficulty.

### BRIEF DESCRIPTION OF THE DRAWINGS

The present application will be further described below with reference to the accompanying drawings and embodiments, in which:
FIG. 1 is a schematic structural view of a reactor-compartment arrangement structure of the offshore nuclear power platform according to an embodiment of the present application;
FIG. 2 is a schematic structural view of walls of the reactor-compartment arrangement structure of the offshore nuclear power platform shown in FIG. 1;
FIG. 3 is a top view of the reactor-compartment arrangement structure of the offshore nuclear power platform shown in FIG. 1;
FIG. 4 is an enlarged view of the structure at portion P shown in FIG. 1;
FIG. 5 is a schematic structural view of the walls and ex-core detector arrangement members of the reactor-compartment arrangement structure of the offshore nuclear power platform shown in FIG. 1.

### DETAILED DESCRIPTION

In order to have a clearer understanding of the technical features, objects and effects of the present application, the specific embodiments of the present application is now described in detail with reference to the accompanying drawings.

For a clearer understanding of the technical features, objects and effects of the present application, specific embodiments of the present application will now be described in detail with reference to the accompanying drawings. In the following description, it should be understood that the orientation or positional relationships indicated by terms such as "front", "rear", "upper", "lower", "left", "right", "vertical", "horizontal", "bottom", "inside", "inward", "outside" and the like are based on the orientation or positional relationships shown in some of the drawings, are constructed and operated in a specific orientation, and are merely for the convenience of describing the present technical solution, rather than indicating that the referred device or element must have a specific orientation, and therefore should not be construed as limiting the present application. When an element is referred to as being "on" or "under" another element, the element may be "directly" or "indirectly" located on the other element, or there may also be one or more intervening elements.

It should also be noted that, unless otherwise expressly specified and limited, terms such as "mounted", "connected", "coupled", "fixed", "disposed" and the like should be interpreted in a broad sense, for example, it may be a fixed connection, a detachable connection, or integrated; it may be a mechanical connection or an electrical connection; it may be a direct connection or an indirect connection via an intermediate medium, and it may be internal communication between two elements or an interaction relationship between two elements.

The terms "first", "second", etc. are only for the convenience of describing the present technical solution, and shall not be construed as indicating or implying relative importance or implicitly specifying the number of the indicated technical features. Therefore, a feature defined by "first", "second", etc. may explicitly or implicitly include one or more of such features. For those of ordinary skill in the art, the specific meaning of the above terms in the present application can be understood according to specific circumstances.

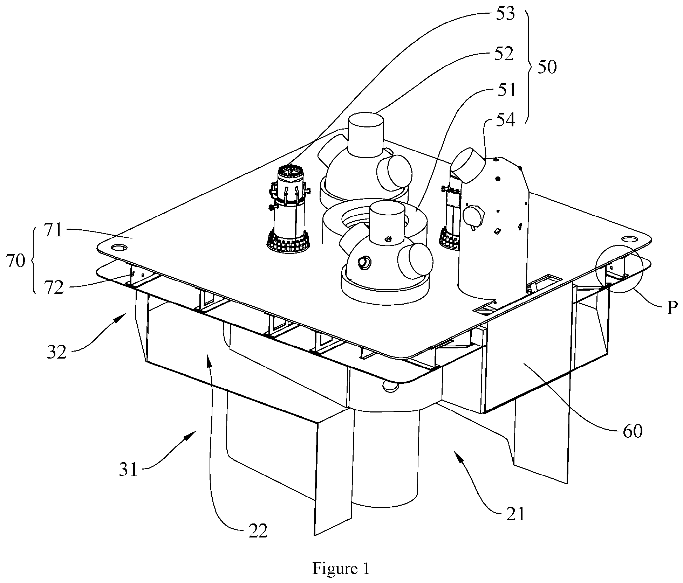

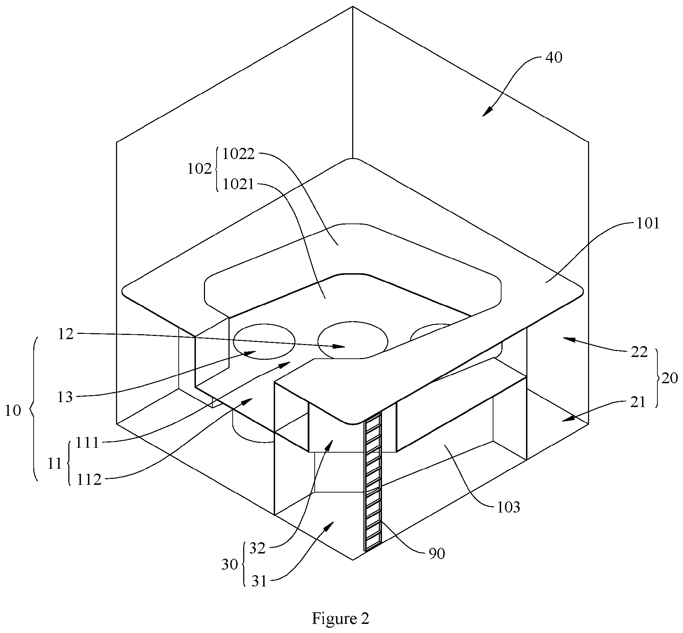

FIG. 1 and FIG. 2 show a reactor-compartment arrangement structure of the offshore nuclear power platform in an embodiment of the present application, which can be applied to a offshore nuclear power platform. The offshore nuclear power platform comprises a hull compartment, and the reactor compartment is disposed in the hull compartment.

The reactor compartment is generally cuboidal and comprises a first partition member 101, a second partition member 102 and a third partition member 103. The first partition member 101 is horizontally disposed within the reactor compartment and divides the reactor compartment into an upper space 40 and a first space located below the upper space 40. The second partition member 102 is connected to the first partition member 101 and arranged within the first space, and divides the first space into a second space and an installation space 10. The third partition member 103 is arranged inside the second space and connected to the first partition member 101 and/or the second partition member 102, so as to divide the second space into a suppression pool space 20 and at least one corner space 30.

The installation space 10 is located at the center of the reactor compartment and configured for arranging and installing the main equipment 50. The suppression pool space 20 is disposed along a periphery of the installation space 10 and is used for accommodating suppression pool water. The corner space 30 is located on an outer side of the suppression pool space 20 away from the installation space 10, and is adapted to accommodate other equipment with low height requirements, such as the medium-pressure safety injection tank and the regenerative heat exchanger. The upper space 40 is located above the installation space 10, the suppression pool space 20 and the corner space 30, and is in communication with the installation space 10 and the corner space 30. It is configured to accommodate the upper portion of the main equipment 50 that has a relatively large height and extends into the upper space 40, as well as to arrange the equipment that needs to be positioned at a high level, such as the containment heat removal heat exchanger, air ducts, and cable trays.

It should be understood that the first partition member 101, the second partition member 102 and the third partition member 103 are all disposed within a compartment body enclosed by walls, and are mutually fixed to the compartment body. In some embodiments, the first partition member 101, the second partition member 102 and the third partition member 103 may be partition structures such as walls or plate-shaped members. In the present embodiment, the reactor compartment is a cuboid-shaped compartment body.

Components such as the main equipment 50, a shielding enclosure 60, a grating platform 70, and an ex-core detector arrangement member 80 are disposed within the reactor compartment. The main equipment 50, the shielding enclosure 60, the grating platform 70, and the ex-core detector arrangement member 80 are all fixed to the first partition member 101 and/or the second partition member 102 and/or the third partition member 103, so as to improve the stability of the reactor compartment, facilitate hoisting and installation, and enable operation under swaying and impact conditions such as wave slamming.

The main equipment 50 comprises a reactor pressure vessel 51, a pressurizer 54, two steam generators 52 and two main pumps 53. The reactor pressure vessel 51, the pressurizer 54, the two steam generators 52 and the two main pumps 53 are all arranged within the installation space 10, with the upper end of each piece of equipment extending into the upper space 40.

The first partition member 101 is plate-shaped, and a central portion of it is formed with a clearance passage for communicating the installation space 10 with the upper space 40, allowing the upper ends of the various equipment and devices of the main equipment 50 to extend into the upper space 40.

The second partition member 102 comprises a base plate 1021 and a connecting plate 1022. The connecting plate 1022 is in the shape of a vertically extending cylinder, with its upper end portion connected to the inner peripheral edge of the first partition member 101, and its lower end portion (i.e., the end of the connecting plate 1022 away from the first partition member 101) connected to the base plate 1021. The base plate 1021, together with the connecting plate 1022, defines the installation space 10.

The installation space 10 comprises an installation chamber 11, a pressure vessel receiving recess 12, and two steam generator receiving recesses 13, wherein the pressure vessel receiving recess 12 and the two steam generator receiving recesses 13 are formed by partial wall surfaces of the base plate 1021 being recessed downward. The upper end surface of the base plate 1021, together with the connecting plate 1022, defines the installation chamber 11, which is respectively in communication with the pressure vessel receiving recess 12 and the two steam generator receiving recesses 13.

The pressure vessel receiving recess 12 and the two steam generator receiving recesses 13 are all cylindrical. The reactor pressure vessel 51 is at least partially arranged within the pressure vessel receiving recess 12, and the two steam generators 52 are at least partially arranged within the two steam generator receiving recesses 13, respectively.

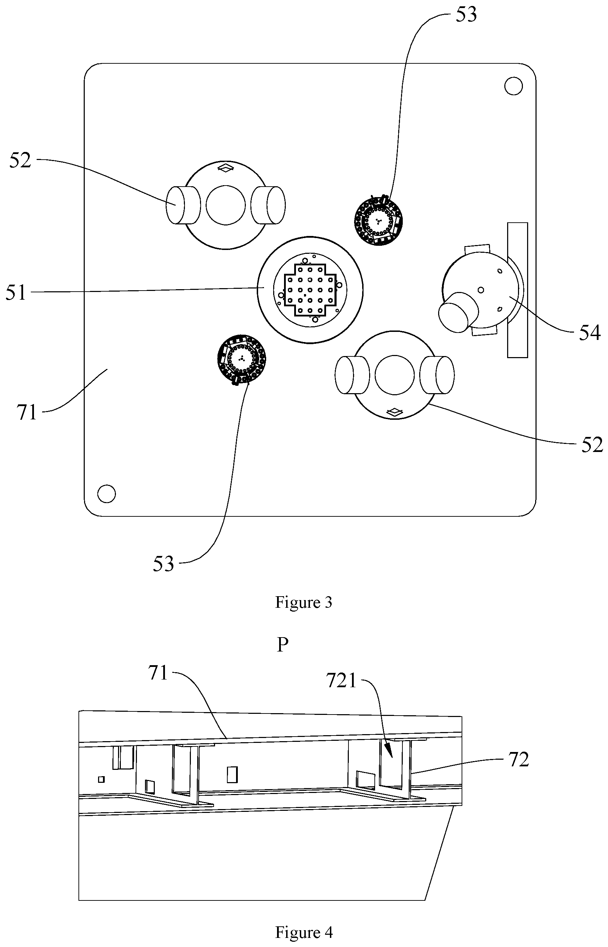

Specifically, referring also to FIG. 3, the pressure vessel receiving recess 12 is located on a central axis of the reactor compartment, and the two steam generator receiving recesses 13 are symmetrically arranged with respect to the pressure vessel receiving recess 12 as the center. The two main pumps 53 are both arranged within the installation chamber 11 and are also symmetrically arranged with the pressure vessel receiving recess 12 as the center, so as to ensure that the center of gravity of the reactor compartment is located on the central axis, thereby preventing wave slamming during operation from causing the offshore nuclear power platform to sway substantially or even overturn.

As further shown in FIG. 2, in the present embodiment, the installation chamber 11 comprises a main chamber 111, wherein the main chamber 111 is diamond-shaped, and the pressure vessel receiving recess 12 and the two steam generator receiving recesses 13 are all in communication with the main chamber 111. The reactor pressure vessel 51 is located at the intersection point of the two diagonals of the diamond-shaped main chamber 111, the two steam generators 52 are both located on one of the diagonals of the diamond-shaped main chamber 111, and the two main pumps 53 are symmetrically arranged, with the pressure vessel receiving recess 12 as the center, on the other diagonal of the diamond-shaped main chamber 111. This arrangement can solve the problem that the steam generators 52 have a relatively large arrangement spacing and require a relatively large arrangement space, and can reduce the size of the reactor compartment by approximately 30%, making the reactor compartment more compact. At the same time, it reduces the moment arm of the reactor compartment under the swaying conditions of wave slamming, thereby improving the stability of the offshore nuclear power platform.

The installation chamber 11 further comprises a pressurizer chamber 112 for accommodating a pressurizer 54. The pressurizer chamber 112 is located on one side of the main chamber 111 and is in communication with the main chamber 111. The arrangement position of the pressurizer chamber 112 is such that the projection of the pressurizer 54 located within the pressurizer chamber 112 in the vertical direction is located on one of the symmetry axes of the reactor compartment, so as to further ensure the stability of the offshore nuclear power platform.

The suppression pool space 20 is disposed along a periphery of the installation space 10, so that the suppression pool water within the suppression pool space 20 can be arranged around the reactor, serving as a primary shield for the reactor and reducing the shielding weight.

Specifically, the water surface of the suppression pool water within the suppression pool space 20 divides the suppression pool space 20 into a water space 21 containing water and a gas space 22 containing no water. The gas space 22 is in communication with the water space 21 and is located above the water space 21.

As shown in FIGS. 1 and 2, in the present embodiment, in the initial state, the water surface of the suppression pool is flush with the lower end surface of the installation chamber 11, and the upper end surface of the gas space 22 (the upper end surface of the suppression pool space 20) is flush with the upper end surface of the installation chamber 11. As a result, the water space 21 is disposed along a periphery of the pressure vessel receiving recess 12 and the two steam generator receiving recesses 13, and the gas space 22 is disposed along a periphery of the installation chamber 11. The water space 21 highly overlaps with the reactor core (or the pressure vessel receiving recess 12), and the suppression pool water further serves to provide a primary shield for the active section of the reactor core, thereby reducing the shielding weight.

It should be noted that the water space 21 and the gas space 22 are actually a mutually communicating space. The "initial state" herein merely represents the height state of the suppression pool water surface under conditions without swaying and rocking, so as to explain the structure of the suppression pool space 20, and does not mean that all of the above descriptions are also satisfied under swaying conditions.

The reactor-compartment arrangement structure further comprises a safety injection system, which is used to replenish water to the primary circuit after a break occurs in the primary circuit, so as to prevent the core with an excessively high temperature from melting. The safety injection system comprises a recirculation filter, which is used to filter out impurity debris from the water replenished to the primary circuit during the water intake process.

In some embodiments, the recirculation filter is arranged within the water space 21 of the suppression pool space 20, which can enable the safety injection system to directly draw water from the suppression pool water. When a break occurs in the primary circuit, high-temperature and high-pressure water leaks from the primary circuit, becomes water vapor after leaking out, and flows back to the suppression pool after cooling and condensation. The water in the suppression pool is then injected into the primary circuit through the recirculation filter. The entire process utilizes the principle that water vapor rises, condenses into water, and then flows back by gravity, thereby achieving recirculation flow of the reactor water in a passive manner, and substantially reducing the occupied space and weight of the containment vessel.

In some embodiments, the pressure vessel receiving recess 12 is in communication with the water space 21 of the suppression pool space 20 through a pipeline, so that the suppression pool can be integrated with In-Vessel Retention technology (hereinafter referred to as IVR), with the gap between the pressure vessel receiving recess 12 and the reactor pressure vessel 51 serving as the core flooding space. Since the water space 21 is disposed along a periphery ofthe pressure vessel receiving recess 12, the communication between the pressure vessel receiving recess 12 and the water space 21 of the suppression pool space 20 through a pipeline can introduce the suppression pool water into the reactor cavity to achieve core flooding. This enables the suppression pool to realize the IVR function, with advantages such as compact space and light weight. At the same time, it enables the suppression pool water to have the capability of removing the heat dissipation of the reactor, thereby alleviating the pressure on the ventilation system of the reactor compartment.

As further shown in FIGS. 1 and 2, the number of the corner spaces 30 in this embodiment is two. The two corner spaces 30 are centrally symmetrical with respect to the central axis of the reactor compartment, so as to ensure the center of gravity of the reactor compartment and improve the stability of the offshore nuclear power platform. Each corner space 30 includes a main space 31 and a personnel passage 32, wherein the personnel passage 32 is located above the main space 31, and its upper and lower end portions are respectively in communication with the main space 31 and the upper space 40 (the communication with the upper space 40 is not shown in the figure), for allowing staff to move among the various spaces within the reactor compartment.

Specifically, the two corner spaces 30 are both located at right-angled corners of the reactor compartment, and a vertical projection of the two corner spaces 30 lies on a diagonal of a vertical projection of the reactor compartment. A horizontal cross-section of the main space 31 is L-shaped, and a horizontal cross-section of the personnel passage 32 is right-triangular.

An upper end surface of the main space 31 (or a connection surface between the personnel passage 32 and the main space 31) is flush with the water surface of the suppression pool (or an upper end surface of the water space 21, or a lower end surface of the installation chamber 11) in a non-sloshing state . An upper end portion of the personnel passage 32 is flush with an upper end surface of the installation chamber 11 (or an upper end surface of the gas space 22, or an upper end surface of the suppression pool space 20), and is operably communicated with the upper space 40.

It should be noted that the term "operably communicated with the upper space 40" herein may mean operably communicated via an openable gate, or communicated via an opening that is always open, which is not limited herein.

In summary, the water space 21, the two steam generator receiving recesses 13, the pressure vessel receiving recess 12, and the two main spaces 31 have the same height, and the space formed by combining them as a whole is rectangular. The gas space 22, the installation chamber 11, and the two personnel passages 32 have the same height, and the space formed by combining them as a whole is also rectangular. Moreover, horizontal cross-sections of the above two rectangular spaces are matched with each other.

Although the corner spaces 30 are arranged outward of the suppression pool space 20 away from the installation space 10, since the corner spaces 30 do not surround the entire periphery of the suppression pool space 20, the suppression pool space 20 shares most of the walls with the containment (i.e., the outer wall of the reactor compartment), which can effectively reduce the structural weight of the reactor compartment and, at the same time, improve the structural strength of the suppression pool and the containment.

The suppression pool space 20 is arranged as a whole around the periphery of the installation space 10. Besides having the effects of shielding the core and reducing the structural weight, this also enables the water space 21 having the suppression pool water to effectively serve as a supporting carrier for the pressure vessel receiving recess 12 and the two steam generator receiving recesses 13, which is advantageous for the design of the supporting structure. Moreover, since the suppression pool space 20 shares walls with the containment, transfer of the load of the main equipment 50 to the containment structure can be achieved.

In some embodiments, the reactor-compartment arrangement structure of the offshore nuclear power platform further comprises at least one ladder 90. The ladder 90 extends upward from the main space 31 into the personnel passage 32, and an upper end portion thereof is matched with an upper end portion of the personnel passage 32, so as to ensure that staff can enter the upper space 40 from the main space 31 via the ladder 90, passing through the personnel passage and passing through an upper wall (not shown in the figures) of the suppression pool space 20. In the present embodiment, the number of the ladders 90 is two, and the two ladders 90 are correspondingly arranged in the two corner spaces 30, respectively.

As shown in FIG. 1, the shielding enclosure 60 is arranged within the installation chamber 11 for shielding a part of the main equipment structures located in the installation chamber 11. The main equipments 50, such as the reactor pressure vessel 51, the steam generators 52, the main pumps 53, and the pressurizer 54, are all inserted through the shielding enclosure 60, with lower end portions extending out of the shielding enclosure 60 and respectively arranged on a lower end surface of the installation chamber 11 or within the pressure vessel receiving recess 12 and the steam generator receiving recesses 13, and upper end portions extending out of the shielding enclosure 60 and into the upper space 40. This facilitates shielding anchorage, simplifies the shielding enclosure 60 and its supporting structure, and further reduces the shielding weight.

In some embodiments, a horizontal cross section of the shielding enclosure 60 matches the horizontal cross section of the installation chamber 11. An upper end surface of the shielding enclosure 60 is slightly higher than the upper end surface of the first partitioning member 101, so as to facilitate fixing of the grating platform 70.

The grating platform 70 comprises a platform body 71 and a plurality of cross beams 72 fixed to the platform body 71. The grating platform 70 is arranged on the first partitioning member 101 and the shielding enclosure 60, and a lower end portion thereof is respectively connected to the upper end surface of the first partitioning member 101 and the upper end surface of the shielding enclosure 60.

Specifically, the platform body 71 is in the shape of a plate and is arranged on the upper end surface of the shielding enclosure 60. The plurality of cross beams 72 are respectively connected to a lower end surface of the platform body 71 and the upper end surface of the first partitioning member 101, so that the platform body 71 is fixed to the first partitioning member 101. Thus, the cross beams 72 of the grating platform 70 can simultaneously serve as reinforcing ribs anchored to the upper end surface of the first partitioning member 101, which not only satisfies the structural strength of both the suppression pool and the grating platform 70, but also reduces the number of components and lowers the difficulty of manufacturing and installation.

Referring to FIG. 4 together, in some embodiments, a plurality of through holes 721 are formed in the cross beam 72 along a thickness direction thereof, for allowing pipelines to pass through, which facilitates arrangement of the pipelines.

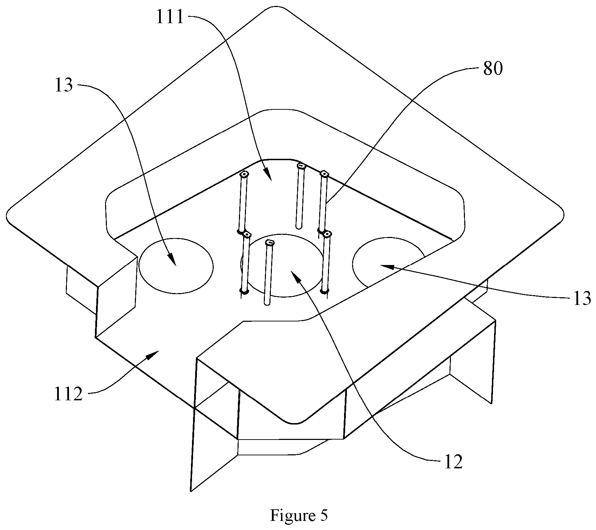

As shown in FIG. 5, in some embodiments, the reactor compartment arrangement structure for an offshore nuclear power platform further comprises a plurality of ex-core detector arrangement members 80. Each ex-core detector arrangement member 80 is longitudinally arranged, and a longitudinal passage for arranging detectors is formed in the middle thereof. The ex-core detector arrangement members 80 are arranged at intervals around the periphery of the pressure vessel receiving groove 12 along a direction parallel to the central axis of the reactor compartment.

Specifically, the ex-core detector arrangement members 80 may be fixed to the base plate 1021 by means such as welding. Moreover, an upper end portion of the ex-core detector arrangement member 80 is slightly higher than the upper end surface of the first partitioning member 101, and a lower end portion thereof is matched with a lower end portion of the pressure vessel receiving recess 12. This simplifies the supporting structure of the ex-core detector passages, facilitates installation and removal of the detectors, and reduces the difficulty of hoisting.

In some embodiments, the reactor-compartment arrangement structure for an offshore nuclear power platform further comprises three cable trays, which can minimize common-cause failures within a confined space. The primary circuit main equipment of the experimental reactor adopts an integrated design, the challenge of achieving physical separation in the reactor compartment layout is increased. To address this, the overall layout of the reactor compartment proposes a main cable bridge planning technique whereby "train A and train B are respectively arranged along the port and starboard side walls, three groups of cable trays are arranged along the top of the compartment section, and finally converge at a dedicated instrumentation and control (I&C) system junction box". This technique achieves the maximum possible physical separation of the three cable trays within the confined space, thereby reducing the risk of common-cause failures.

In some embodiments, the reactor compartment arrangement structure of the offshore nuclear power platform adopts a combined lifting technique of a "lifting point matrix and mobile cantilever crane". The lifting point matrix offers a large lifting capacity but has a limited coverage range, whereas the mobile cantilever crane is highly flexible in movement and provides a wide lifting coverage but has insufficient lifting capacity. The combination of the two can efficiently solve the lifting problems of equipment and shielding-including the main pump-within the compact space of the reactor compartment, achieving three-dimensional coverage of all items requiring lifting inside the reactor compartment.

The present application also provides an offshore nuclear power platform, which comprises a hull compartment and any one of the above reactor-compartment arrangement structure of the offshore nuclear power platform, wherein the reactor-compartment arrangement structure of the offshore nuclear power platform is arranged within the hull compartment.

It can be understood that the above embodiments only express preferred implementations of the present application, and the description thereof is relatively specific and detailed, but should not be construed as limiting the patent scope of the present application. It should be pointed out that, for those of ordinary skill in the art, without departing from the concept of the present application, the above technical features can be freely combined, and several modifications and improvements can be made, all of which fall within the protection scope of the present application. Therefore, any equivalent substitutions and modifications made within the scope of the claims of the present application shall fall within the scope covered by the claims of the present application.

## Claims

1. A reactor-compartment arrangement structure of an offshore nuclear power platform, **characterized in that**, comprising:
a first partition member (101), the first partition member (101) being horizontally arranged within a reactor compartment so as to divide the reactor compartment into an upper space (40) and a first space located below the upper space (40);
a second partition member (102), the second partition member (102) being connected to the first partition member (101) and located in the first space so as to divide the first space into a second space and an installation space (10) for accommodating main equipment (50); and
a third partition member (103), the third partition member (103) being disposed within the second space and connected to the first partition member (101) and/or the second partition member (102) so as to divide the second space into a suppression pool space (20) and at least one corner space (30);
wherein, the suppression pool space (20) is disposed along a periphery of the installation space (10), and the corner space (30) is located on an outer side of the suppression pool space (20) away from the installation space (10).

2. The reactor-compartment arrangement structure of the offshore nuclear power platform according to claim 1, **characterized in that**, a central portion of the first partition member (101) is formed with a clearance passage for communicating the installation space (10) with the upper space (40); the second partition member (102) comprises a connecting plate (1022) and a base plate (1021), the connecting plate (1022) being connected to an inner peripheral edge of the first partition member (101), and the base plate (1021) being connected to an end of the connecting plate (1022) remote from the first partition member (101), the base plate (1021) together with the connecting plate (1022) defining the installation space (10);
the installation space (10) comprises an installation chamber (11), a pressure vessel receiving recess (12), and two steam generator receiving recesses (13); a portion of a wall surface of the base plate (1021) is recessed downwardly to form partition members including the pressure vessel receiving recess (12) and the two steam generator receiving recesses (13); the pressure vessel receiving recess (12) is located on a central axis of the reactor-compartment arrangement structure, and the two steam generator receiving recesses (13) are symmetrically arranged with respect to the pressure vessel receiving recess (12); an upper end surface of the base plate (1021) together with the connecting plate (1022) defines the installation chamber (11), and the installation chamber (11) is in communication with the pressure vessel receiving recess (12) and the two steam generator receiving recesses (13), respectively.

3. The reactor-compartment arrangement structure of the offshore nuclear power platform according to claim 2, **characterized in that**, the installation chamber (11) comprises a pressurizer chamber (112) and a diamond-shaped main chamber (111), the main chamber (111) being in communication with the pressurizer chamber (112); the pressure vessel receiving recess (12) and the two steam generator receiving recesses (13) are each in communication with the main chamber (111), the two steam generator receiving recesses (13) being formed along one diagonal of the main chamber (111);
the main equipment (50) comprises a pressurizer (54), a pressure vessel (51), two steam generators (52), and two main pumps (53); the pressure vessel (51) and the steam generators (52) are disposed within the main chamber (111), and at least partially extend into the pressure vessel receiving recess (12) and the steam generator receiving recesses (13), respectively; the main pumps (53) are disposed within the main chamber (111) and symmetrically arranged with respect to the pressure vessel receiving recess (12) along the other diagonal of the main chamber (111); the pressurizer (54) is disposed within the pressurizer chamber (112), and a projection of the pressurizer (54) in a vertical direction is located on one of symmetry axes of the reactor compartment.

4. The reactor-compartment arrangement structure of the offshore nuclear power platform according to claim 2, **characterized in that**, suppression pool water is stored in the suppression pool space (20), and a water surface of the suppression pool water divides the suppression pool space (20) into a water space (21) and a gas space (22); in an initial state, the water surface of the suppression pool water is flush with a lower end surface of the installation chamber (11), such that the water space (21) is disposed along a periphery of the pressure vessel receiving recess (12) and the two steam generator receiving recesses (13); an upper end surface of the gas space (22) is flush with an upper end surface of the installation chamber (11), such that the gas space (22) is disposed along a periphery of the installation chamber (11).

5. The reactor-compartment arrangement structure of the offshore nuclear power platform according to claim 4, **characterized in that**, the pressure vessel receiving recess (12) communicates with the suppression pool space (20) through a pipeline.

6. The reactor-compartment arrangement structure of the offshore nuclear power platform according to claim 4, **characterized in that**, the corner space (30) comprises a main space (31) and a personnel passage (32) in communication with the main space (31), and the personnel passage (32) is located above the main space (31) and is in communication with the main space (31).

7. The reactor-compartment arrangement structure of the offshore nuclear power platform according to claim 5, **characterized in that**, the reactor-compartment arrangement structure of the offshore nuclear power platform further comprising a shielding enclosure (60), wherein the shielding enclosure (60) is disposed within the installation chamber (11), the main equipment (50) extends through the shielding enclosure (60), and a horizontal cross section of the shielding enclosure (60) is adapted to a horizontal cross section of the installation chamber (11).

8. The reactor-compartment arrangement structure of the offshore nuclear power platform according to claim 7, **characterized in that**, an upper end surface of the shielding enclosure (60) is higher than an upper end surface of the first partition member (101); the reactor-compartment arrangement structure of the offshore nuclear power platform further comprises a grating platform (70), the grating platform (70) being disposed on the first partition member (101) and the shielding enclosure (60), a lower portion thereof being connected respectively to the upper end surface of the first partition member (101) and the upper end surface of the shielding enclosure (60).

9. The reactor-compartment arrangement structure of the offshore nuclear power platform according to claim 2, **characterized in that**, the reactor-compartment arrangement structure of the offshore nuclear power platform further comprising a plurality of ex-core detector arrangement members (80), wherein the ex-core detector arrangement member (80) is formed therein with a longitudinal passage for accommodating an ex-core detector, and the ex-core detector arrangement members (80) are circumferentially spaced around the pressure vessel receiving recess (12).

10. The reactor-compartment arrangement structure of the offshore nuclear power platform according to claim 1, **characterized in that**, the number of the corner spaces (30) is two, the two corner spaces (30) being centrally symmetrical with respect to a central axis of the reactor-compartment arrangement structure of the offshore nuclear power platform;
and/or, the reactor-compartment arrangement structure of the offshore nuclear power platform further comprises a safety injection system configured to supply water to a primary circuit, the safety injection system comprising a recirculation filter disposed in the water of the suppression pool space (20);
and/or, the corner space (30) is provided with a medium-pressure safety injection tank and a regenerative heat exchanger, neither of which has a height requirement;
and/or, a ladder (90) is provided in the corner space (30) for allowing personnel to move to the upper space (40).

11. An offshore nuclear power platform, **characterized in that**, it comprises a hull compartment and the reactor-compartment arrangement structure of the offshore nuclear power platform according to any one of claims 1 to 10, wherein reactor-compartment arrangement structure of the offshore nuclear power platform is disposed within the hull compartment.
